# DEMANDE DE BREVET EUROPEEN

(11) **EP 0 827 892 A2**
(43) Date de publication de la demande: **11.03.1998**
(21) Numéro de dépôt: 97420130.3
(22) Date de dépôt: 25.07.1997
(51) Int. Cl.: B62D 5/22

(54) **Valve d'assistance pour direction assistée de véhicule automobile**

(30) Priorité: 04.09.1996 FR 9610988
(71) Demandeur: Société de Mécanique d'Irigny, 69540 Irigny (FR)
(72) Inventeur: Brunon, Christian, 42800 Dargoire (FR); Monvaillier, Jérôme, 69530 Brignais (FR)
(74) Mandataire: Bratel, Gérard

(57) **Abrégé**

La valve d'assistance pour direction assistée hydraulique comprend, à l'intérieur d'un carter (2), un pignon (3) et un rotor (4) montés suivant un même axe (1), et liés par une barre de torsion (12), ainsi qu'une chemise rotative (5) entourant le rotor (4) et coopérant avec un pion d'entraînement (11) solidaire du pignon (3). Ce dernier est guidé en rotation dans le carter (2) par deux paliers (7, 8), tandis que le rotor (4) est guidé en rotation dans le carter (2) par un palier (9), et dans le pignon (3) par un palier (10). Au niveau de ce palier (10), la liaison entre le rotor (4) et le pignon (3) est réalisée comme une liaison de type "rotule" (14), de manière à permettre un désalignement du rotor (4) par rapport au pignon (3). Le bruit résultant du choc entre la chemise (5) et le pion d'entraînement (11) est ainsi évité.

## Description

La présente invention concerne une valve d'assistance pour direction assistée hydraulique de véhicule automobile. Plus particulièrement, cette invention se rapporte à une telle valve d'assistance, pourvue d'un dispositif de réduction de son bruit de fonctionnement, observé habituellement lors de l'inversion du sens de braquage.

Lors de l'inversion du sens de braquage, un bruit d'origine mécanique se produit dans la valve d'assistance. Ce bruit, appelé "cloc chemise", est la conséquence du choc entre la chemise rotative de la valve et un pion d'entraînement associé à cette chemise, pion qui est solidaire du pignon de la valve. Plus particulièrement, le bruit ici considéré, se produisant lors de l'inversion du sens de braquage, est dû à la compensation des jeux de fabrication et de montage entre la chemise et le pion d'entraînement, ainsi qu'à l'effort transmis par ce pion.

Suivant l'architecture du véhicule concerné, ce bruit d'origine interne à la valve d'assistance peut se propager, au travers de la colonne de direction, jusqu'à l'habitacle du véhicule et, éventuellement, occasionner une gêne pour le conducteur.

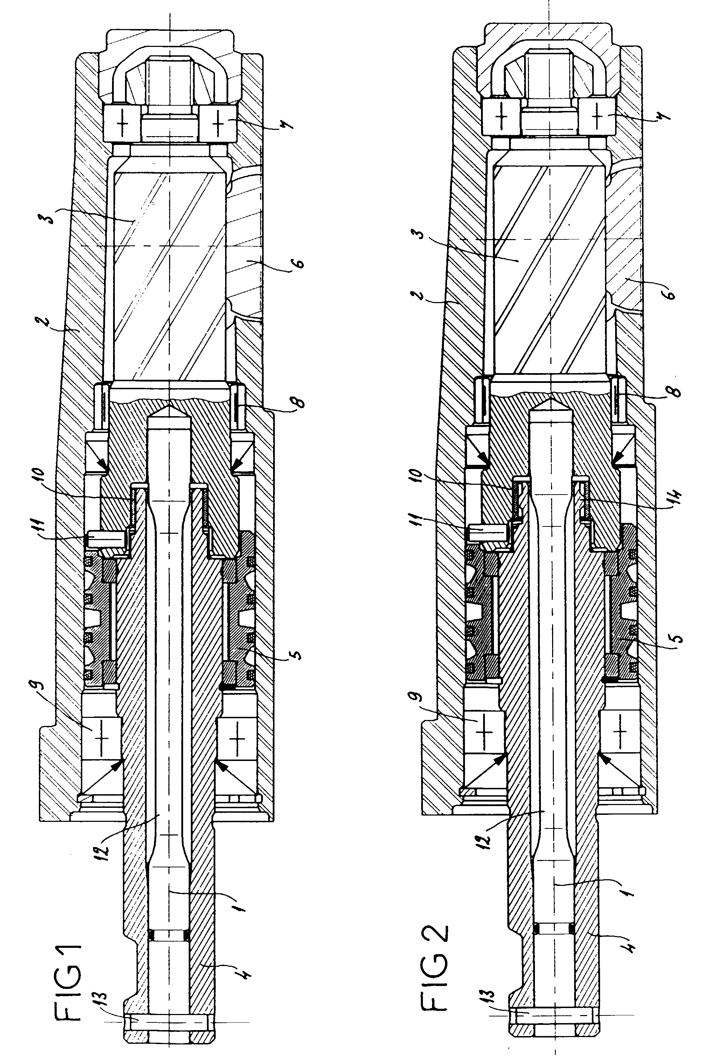

La figure 1 du dessin schématique annexé représente une valve d'assistance traditionnelle, vue en coupe longitudinale ; elle permet d'en rappeler la structure et le principe de fonctionnement, et d'expliquer l'origine du bruit précédemment évoqué.

La valve d'assistance comprend, disposés suivant son axe longitudinal 1 à l'intérieur du carter de direction 2, un pignon 3 et un rotor 4, ce dernier étant entouré partiellement par la chemise 5. Le pignon 3, venant en prise avec la crémaillère 6, est guidé en rotation dans le carter de direction 2 par deux paliers opposés 7 et 8. Le rotor 4 est lui-même guidé en rotation dans le carter 2 par un palier extérieur 9, et dans le pignon 3 par un palier intérieur 10, ce dernier palier 10 réalisant un guidage du type "pivot glissant long".

L'extrémité intérieure du pignon 3 porte le pion d'entraînement 11, orienté radialement, qui est engagé dans une encoche correspondante de la chemise 5.

Le rotor 4 est lié en rotation, par sa partie extérieure, avec le volant de direction du véhicule. A l'intérieur du rotor 4, suivant l'axe 1, est disposée une barre de torsion 12, dont une extrémité est encastrée dans le pignon 3, et dont l'autre extrémité est liée en rotation, par une goupille 13, avec l'extrémité extérieure du rotor 4.

En conséquence de cette structure, l'ensemble pignon 3-chemise 5 peut décrire une rotation relative, d'amplitude limitée, par rapport au rotor 4.

La valve d'assistance se comporte comme un distributeur hydraulique proportionnel au couple. Sur cette valve s'exercent, d'une part, un couple résistant sur le pignon 3, provenant de l'adhérence des roues directrices du véhicule et transmises par la crémaillère 6, et d'autre part, un couple d'entrée sur le rotor 4 provenant du volant ; ces deux couples sont de sens contraires.

Ainsi, les deux couples entraînent une torsion de la barre de torsion 12, donc un décalage angulaire entre le rotor 4 (lié au volant) et la chemise 5 (liée au pignon 3 par l'intermédiaire du pion d'entraînement 11). Ce décalage angulaire ouvre, proportionnellement au couple, un passage hydraulique vers une chambre de vérin, tandis qu'une chambre opposée est en communication avec le circuit de retour hydraulique. La pression dans la chambre de vérin augmente, au fur et à mesure que le décalage angulaire entre le rotor 4 et la chemise 5 s'accroît. Cette pression engendre sur la chemise 5 un couple moteur, qui est transmis au pignon 3 et qui s'oppose ainsi au couple résistant.

Dans la structure d'une telle valve d'assistance, l'ensemble des guidages (par les paliers 7, 8, 9 et 10) par rapport au carter 2 est hyperstatique. En cas de désalignement de l'axe du rotor 4 par rapport à l'axe du pignon 3, et du fait de l'hyperstatisme, des contraintes importantes apparaissent, et engendrent des frottements et des déformations sur le rotor 4, ce qui empêche une rotation libre (dans la limite du jeu de fabrication et de montage entre pion d'entraînement 11 et chemise 5) de la chemise 5 par rapport au pignon 3.

En conséquence de ce qui précède, dans un premier temps la consigne de rotation du rotor 4 se traduit uniquement par un arc-boutement de celui-ci. Passée une certaine valeur de contrainte, la rotation de la chemise 5 se fait alors brutalement, jusqu'à ce que cette chemise 5 vienne (au niveau de son encoche) en contact avec le pion d'entraînement 11. L'énergie ainsi libérée provoque le choc entre la chemise 5 et le pion d'entraînement 11, générant ainsi le bruit appelé "cloc chemise".

Une telle valve d'assistance connue est décrite, par exemple, dans le document FR 2380175 A, le document FR 2382361 A ou le document GB 2202502 A.

La présente invention vise à perfectionner une telle valve d'assistance pour direction assistée, de manière à supprimer ce bruit et les désagréments qui en résultent.

A cet effet, l'invention a essentiellement pour objet une valve d'assistance pour direction assistée hydraulique de véhicule automobile, du genre comprenant, à l'intérieur d'un carter, un pignon et un rotor montés sensiblement suivant un même axe et liés par l'intermédiaire d'une barre de torsion disposée suivant ledit axe, ainsi qu'une chemise rotative entourant le rotor et coopérant avec un pion d'entraînement solidaire du pignon, ce dernier étant guidé en rotation dans le carter par deux paliers opposés, tandis que le rotor est guidé en rotation dans le carter par un palier extérieur, et dans le pignon par un palier intérieur, la valve étant caractérisée en ce que, au niveau dudit palier intérieur, la liaison entre le rotor et le pignon est réalisée de manière à permettre un léger désalignement du rotor par rapport au pignon.

Grâce à cette disposition, l'ensemble des guidages en rotation de la valve d'assistance, traditionnellement hyperstatique, est rendu isostatique, ce qui permet la suppression du bruit engendré par le choc entre la chemise et le pion d'entraînement.

De préférence, la liaison entre le rotor et le pignon, au niveau du palier intérieur, est une liaison de type "rotule". Une telle liaison est elle-même réalisable, en pratique, sous diverses formes :

Selon une première forme de réalisation, la liaison de type "rotule" est réalisée par une portée annulaire de faible longueur, à surface extérieure cylindrique, formée sur l'extrémité intérieure du rotor et réalisant une liaison linéaire annulaire.

Dans une variante, la liaison de type "rotule" est réalisée par une portée annulaire à surface sphérique formée sur l'extrémité intérieure du rotor.

Selon une autre forme de réalisation, la liaison de type "rotule" est réalisée par une portée annulaire de faible longueur, à surface intérieure cylindrique, réalisée dans le palier intérieur ou directement dans le pignon.

Selon une dernière forme de réalisation, la liaison de type "rotule" est réalisée par un rotulage interne ou externe du palier intérieur.

Une autre solution technique, entrant aussi dans le cadre de la présente invention, consiste en ce que la liaison entre le rotor et le pignon est réalisée avec un jeu permettant le désalignement du rotor par rapport au pignon.

Dans tous les cas, pour obtenir un bon fonctionnement du dispositif, il est avantageux que le palier extérieur de guidage en rotation du rotor dans le carter possède une tolérance au déversement. Cette tolérance peut être obtenue par un jeu interne du palier considéré, ou par un montage avec un jeu de ce palier sur le rotor ou dans le carter, ou encore par un rotulage interne ou externe audit palier.

L'invention sera de toute façon mieux comprise à l'aide de la description qui suit, en référence à la figure 2 du dessin schématique annexé qui représente, à titre d'exemple, une forme de réalisation de cette valve d'assistance pour direction assistée, vue en coupe longitudinale.

Sur la figure 2, les éléments communs avec ceux de la figure 1 sont désignés par les mêmes repères numériques, et ils ne seront pas décrits ici une nouvelle fois.

Selon l'invention, le "pivot glissant long", au niveau du palier intérieur 10, est redéfini afin d'obtenir une liaison permettant un rotulage entre le rotor 4 et le pignon 3.

Dans l'exemple de réalisation illustré par la figure 2, l'extrémité intérieure du rotor 4 présente une portée annulaire 14, de faible longueur, qui est insérée dans le palier 10. On obtient ainsi une liaison linéaire annulaire entre le rotor 4 et le pignon 3. La portée annulaire 14 présente ici une surface extérieure cylindrique, de faible largeur, située entre deux flancs inclinés. En variante, la portée annulaire 14 réalisée sur le rotor 4 peut présenter une surface sphérique.

Un bon fonctionnement du dispositif nécessite une tolérance au déversement du palier extérieur 9 du rotor 4. Ceci peut être obtenu soit par un jeu interne suffisant du palier 9, soit par un montage avec jeu du palier 9 sur le rotor 4 ou du palier 9 dans le carter 2, soit par un rotulage interne ou externe de ce palier 9.

La disposition décrite ci-dessus, et illustrée sur la figure 2, rend l'ensemble des guidages isostatique et autorise ainsi un désalignement entre le rotor 4 et le pignon 3, qui lui-même permet la suppression du bruit engendré par le choc entre la chemise 5 et le pion d'entraînement 11.

L'on ne s'éloignerait pas du cadre de l'invention par le recours à d'autres modes de réalisation de la liaison linéaire annulaire entre le rotor 4 et le pignon 3, constituant des équivalents de la solution particulière précédemment décrite et illustrée au dessin, tels que :
- l'utilisation d'une portée intérieure cylindrique courte réalisée dans le palier 10 ou directement dans le pignon 3 (ce qui représente une simple "inversion" de la solution précédemment décrite) ;
- l'utilisation d'un rotulage interne ou externe du palier 10 ;
- l'utilisation d'un simple jeu de fonctionnement déterminé pour permettre un léger désalignement du rotor 4 par rapport au pignon 3 (sans donner au rotor ou au pignon une configuration particulière).

## Revendications

1. Valve d'assistance pour direction assistée hydraulique de véhicule automobile, du genre comprenant, à l'intérieur d'un carter (2), un pignon (3) et un rotor (4) montés sensiblement suivant un même axe (1) et liés par l'intermédiaire d'une barre de torsion (12) disposée suivant ledit axe (1), ainsi qu'une chemise rotative (5) entourant le rotor (4) et coopérant avec un pion d'entraînement (11) solidaire du pignon (3), ce dernier étant guidé en rotation dans le carter (2) par deux paliers opposés (7, 8), tandis que le rotor (4) est guidé en rotation dans le carter (2) par un palier extérieur (9), et dans le pignon (3) par un palier intérieur (10), caractérisée en ce que, au niveau dudit palier intérieur (10), la liaison entre le rotor (4) et le pignon (3) est réalisée de manière à permettre un léger désalignement du rotor (4) par rapport au pignon (3).

2. Valve d'assistance pour direction assistée selon la revendication 1, caractérisée en ce que la liaison entre le rotor (4) et le pignon (3), au niveau du palier intérieur (10), est une liaison de type "rotule".

3. Valve d'assistance pour direction assistée selon la revendication 2, caractérisée en ce que la liaison de type "rotule" est réalisée par une portée annulaire (14) de faible longueur, à surface extérieure cylindrique, formée sur l'extrémité intérieure du rotor (4).

4. Valve d'assistance pour direction assistée selon la revendication 2, caractérisée en ce que la liaison de type "rotule" est réalisée par une portée annulaire (14) à surface sphérique formée sur l'extrémité intérieure du rotor (4).

5. Valve d'assistance pour direction assistée selon la revendication 2, caractérisée en ce que la liaison de type "rotule" est réalisée par une portée annulaire de faible longueur, à surface intérieure cylindrique, réalisée dans le palier intérieur (10) ou directement dans le pignon (3).

6. Valve d'assistance pour direction assistée selon la revendication 2, caractérisée en ce que la liaison de type "rotule" est réalisée par un rotulage interne ou externe du palier intérieur (10).

7. Valve d'assistance pour direction assistée selon la revendication 1, caractérisée en ce que la liaison entre le rotor (4) et le pignon (3) est réalisée avec un jeu permettant le désalignement du rotor (4) par rapport au pignon (3).

8. Valve d'assistance pour direction assistée selon l'une quelconque des revendications 1 à 7, caractérisée en ce que le palier extérieur (9) de guidage en rotation du rotor (4) dans le carter (2) possède une tolérance au déversement.

9. Valve d'assistance pour direction assistée selon la revendication 8, caractérisée en ce que la tolérance au déversement dudit palier extérieur (9) est obtenue par un jeu interne de ce palier (9), ou par un montage avec jeu de ce palier (9) sur le rotor (4) ou dans le carter (2), ou par un rotulage interne ou externe audit palier (9).
